# EUROPÄISCHE PATENTSCHRIFT

(11) **EP 0 871 578 B1**
(45) Veröffentlichungstag und Bekanntmachung des Hinweises auf die Patenterteilung: **15.09.1999**
(21) Anmeldenummer: 96945994.0
(22) Anmeldetag: 19.11.1996
(51) Int. Cl.: B60K 28/14, B60T 8/00

(54) **FAHRDYNAMIK-REGELUNGSVERFAHREN UND -VORRICHTUNG**
METHOD AND DEVICE FOR CONTROLLING VEHICLE TRAVEL DYNAMICS
PROCEDE ET DISPOSITIF DE REGULATION DE LA DYNAMIQUE DU MOUVEMENT DE VEHICULES

(30) Priorität: 29.01.1996 DE 19602879
(43) Veröffentlichungstag der Anmeldung: 21.10.1998
(73) Patentinhaber: KNORR-BREMSE Systeme für Nutzfahrzeuge GmbH, 80809 München (DE)
(72) Erfinder: SEMSEY, Akos, H-1033 Budapest (HU)
(86) Internationale Anmeldenummer: DE9602199
(87) Internationale Veröffentlichungsnummer: WO9728017

(56) Entgegenhaltungen:
- EP-A- 0 321 894

## Beschreibung

Die Erfindung betrifft ein Fahrdynamik-Regelungsverfahren und eine entsprechende Vorrichtung nach den Oberbegriffen der Ansprüche 1 und 6. In vielen Fahrsituationen ist es vorteilhaft, über ein Steuer- oder Regelsystem in Abhängigkeit der spezifischen Fahrsituationsparameter in das Fahrverhalten eines Fahrzeuges einzugreifen, um kritische Situationen frühzeitig vermeiden zu können. Ein derartiges Verfahren ist bereits in verschiedenen Ausführungsformen am Markt bekannt und als Produkt eingeführt.

Gegenüber dem Stand der Technik zielt die Erfindung darauf ab, ein Fahrdynamik-Regelungsverfahren zu schaffen, das auch Grenzsituationen bzgl. der Kippstabilität von Fahrzeugen auf einfache Weise erkennt.

Die Erfindung erreicht dieses Ziel durch die Gegenstände der Ansprüche 1 und 6. Mit Hilfe der Erfindung wird ein Fahrdynamik-Regelungsverfahren für Kraftfahrzeuge, insbesondere für Nutzfahrzeuge, geschaffen, bei dem bei Blockierneigung der Bremsdruck im Sinne eines Verhinderns eines zu hohen Radschlupfes variiert wird, wobei eine Abnahme der Kippstabilität des Fahrzeuges während einer Kurvenfahrt anhand eines Einsetzens eines ABS-Regel-Eingriffes ermittelt wird. Die gattungsgemäße Vorrichtung wird erfindungsgemäß mit einer Einrichtung - insbesondere einer Zusatzsoftware zum ABS-System - versehen, die derart ausgelegt ist, daß eine Abnahme der Kippstabilität des Fahrzeuges während einer Kurvenfahrt anhand eines Einsetzens eines ABS-Regel-Eingriffes ermittelt wird.

Die Erfindung eignet sich damit in vorteilhafter Weise zur Abwendung von Gefahrensituationen, in denen ein Fahrzeug - insbesondere ein Nutzfahrzeug - umzukippen droht. Gerade bei Nutzfahrzeugen kann, bei einem entsprechend hohen Kraftschluß zwischen Straße und Reifen, das Fahrzeug - anstelle aus der Kurve getragen zu werden - auch umkippen. Diese Situation erkennt die Erfindung auf überraschend einfache Weise am Einsetzen eines ABS-Regelvorganges während eines Bremsens bei einer Kurvenfahrt. Wenn der Fahrer (oder aber, bei einer besonders vorteilhaften Weiterbildung der Erfindung) ein automatisch bremsendes System - während einer Kurvenfahrt leicht bremst (so leicht, daß ein Blockieren z.B. wegen Glätte an sich nicht auftreten dürfte), wird das Blockieren der Räder als auslösendes Moment für ein Warnsignal oder einen stabilisierenden Fahrdynamik-Eingriff verwendet, denn das Blockieren der Räder weist in diesem Fall darauf hin, daß das Fahrzeug mit den entsprechenden Rädern leicht vom Boden abgehebt.

Die Aktivierung des Antiblockiersystemes kann beispielsweise elektronisch detektiert werden. Zusätzliche, aufwendige Sensoren entfallen; lediglich die Querbeschleunigung kann z.B. auch mittels eines hierzu geeigneten Sensors detektiert werden. Zur Erhöhung der Fahrstabilität kann dann bei einer detektierten Abnahme der Kippstabilität ein die Kippstabilität des Fahrzeuges erhöhender Fahrdynamik-Regeleingriff ausgelöst werden. Ein besonders vorteilhaftes Anwendungsbiet der Erfindung liegt im Nutzfahrzeugbereich, da gerade hier immer wieder Unfälle durch Umkippen der Fahrzeuge in Kurven oder bei heftigen Lenkbewegungen in Gefahrensituationen auftreten.

Ein weiterer entscheidender Vorteil der Erfindung ist darin zu sehen, daß bei einer aus Zug- und Anhängerfahrzeug zusammengesetzten Fahrzeugkombination die Soft- und/oder Hardware zur Durchführung des Regelverfahrens nur auf der Zugmaschine installiert werden muß: die Erfindung ist bei allen mit einem ABS-System ausgerüsteten Anhängefahrzeugen (z.B. Sattelanhänger) einsetzbar, ohne daß das Anhänger-ABS über spezielle Fahrdynamik-Zusatzeinrichtungen verfügen muß. Das Anhänger-ABS wird damit durch die Erfindung in keinster Weise verteuert; auch ist eine mit einer Vorrichtung zur Durchführung des erfindungsgemäßen Verfahrens ausgerüstete Zugmaschine mit verschiedensten Anhängefahrzeugen - unabhängig von deren ABS-System - kombinierbar.

Besonders vorteilhaft ist es ferner, wenn zunächst anhand einer dazu geeigneten Größe - z.B. die Querbeschleunigung - ermittelt wird, daß eine Kurvenfahrt mit entsprechender Gefahrensituation vorliegt. In diesem Fall wird automatisch ein geringer ABS-Regeleingriff (z.B. bei einem pneumatischen Bremssystem eines LKW eine Bremsung mit 0,5 bar) gestartet, der das Fahrverhalten des Fahrzeuges fast nicht beeinflußt. Startet bei einer derarttigen Situation dennoch ein ABS-Regelvorgang, kann es sich mit größter Wahrscheinlichkeit nicht um ein Blockieren aufgrund glatter Fahrbahn, sondern nur um ein Blockieren aufgrund eines Abhebens des entsprechenden Rades von der Fahrbahn handeln. In diesem Fall werden z.B. Warnsignale an den Fahrer ausgegeben und/oder es wird eine Bremsung zum Herabsetzen der Querbeschleunigung gestartet oder ein anderer geeigneter Eingriff in die Fahrdynamik vorgenommen (Motordrosselung, Lenkung).

Nachfolgend werden anhand der Zeichnung Ausführungsbeispiele der Erfindung näher erläutert. Es zeigt:
- Fig. 1: ein Flußdiagramm, welches ein Ausführungsbeispiel eines erfindungsgemäßen Regelverfahrens veranschaulicht;
- Fig. 2: ein Schema eines erfindungsgemäß ausgerüsteten Sattelzuges;
- Fig. 3: eine Fahrsituation, welche die Wirkung der Erfindung veranschaulicht.

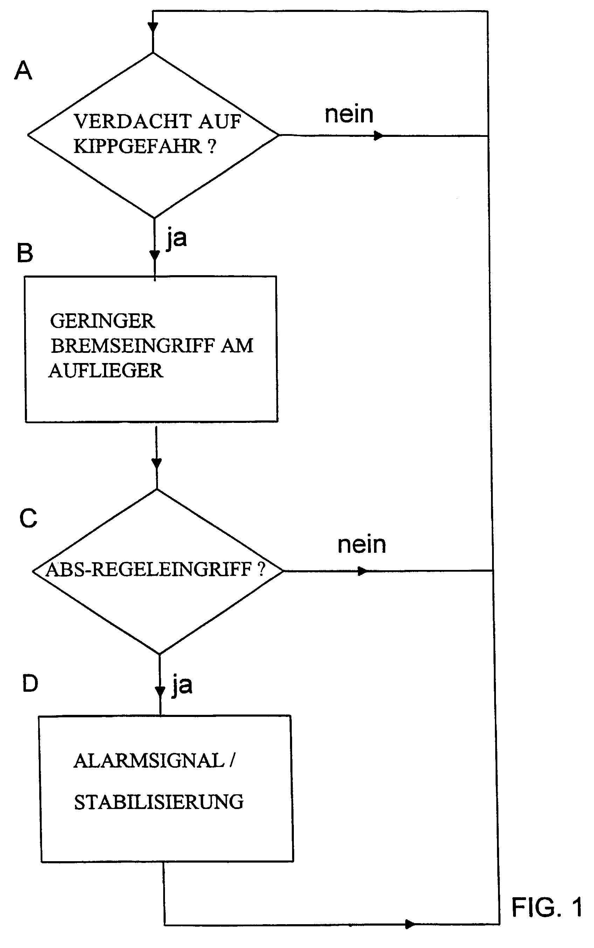

Fig. 1 zeigt ein Flußdiagramm, welches eine besonders vorteilhafte Variante der Erfindung verdeutlicht. Es wird ein Fahrdynamik-Regelungsverfahren mit folgenden, in Schleifen ablaufenden, Schritten angegeben:
A) Zunächst erfolgt eine ständige Ermittlung der Querbeschleunigung eines Fahrzeuges: Überschreitet die Querbeschleunigung vorgegebene Grenzwerte?
B) Wenn die Querbeschleunigung einen Grenzwert überschreitet, wird ein relativ zur maximal möglichen Bremskraft geringer Bremseingriff eingeleitet, der in erster Linie dazu dient, festzustellen, ob die Räder vom Boden abheben (dann greift nämlich das ABS auch bei geringer Bremskraft ein). Daher wird:
C) ständig überwacht, ob das ABS-System (in Abhängigkeit der Radlast) anspricht (Messung Stromversorgung am Stecker der Zugmaschine oder am ABS-Ventil)?
D) Wenn das ABS-System anspricht, wird ein Alarmsignal ausgelöst und/oder es wird ein die Kippstabilität vergrößernder Regeleingriff in das Fahrverhalten des Fahrzeuges durchgeführt (z.B. eine Bremsung; ggf. mit deaktiviertem ABS).

Bei einem Sattelzug mit Sattelanhänger wird zur Ermittlung einer Abnahme der Kippstabilität des Fahrzeuges während einer Kurvenfahrt der Beginn eines ABS-Regel-Eingriffes am Auflieger verwendet.

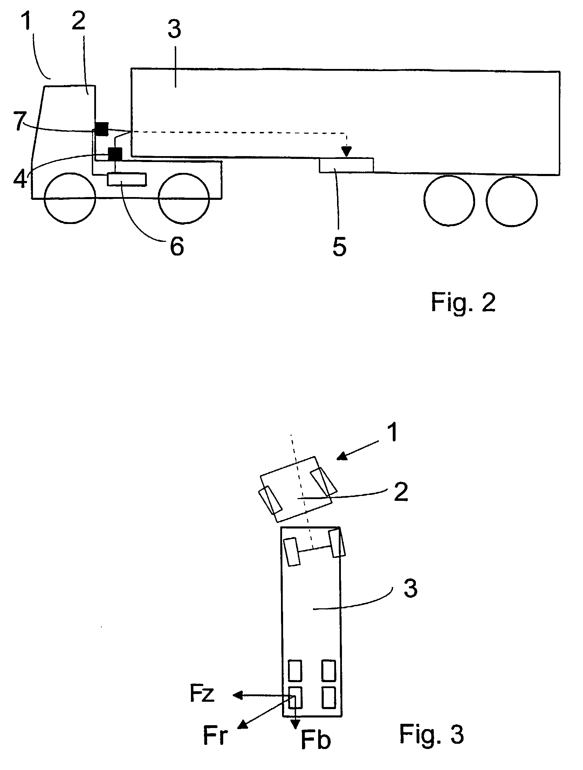

Fig. 2 zeigt eine schematische Darstellung eines Nutzfahrzeuges (Sattelzug), das mit einer erfindungsgemäßen Vorrichtung ausgerüstet ist. Das Nutzfahrzeug 1 besteht aus Zugmaschine 2 und Sattelanhänger 3. Über ein Meßgerät 4 zur Strommessung, welches an das Anhänger-ABS 5 angeschlossen ist, kann das Einsetzen eines ABS-Regeleingriffes detektiert werden und dem - beispielsweise um entsprechende Soft- und/oder Hardwareeinrichtungen zur Fahrdynamikregelung - ergänzten ABS-Steuergerät 6 zugeführt werden (Bezugszeichen 7: Bremsdruckregler für den Auflieger). Hier wird anschaulich deutlich, daß am Auflieger 3 keine konstruktiven Veränderungen durchgeführt werden müssen, um die Erfindung nutzen zu können.

Fig. 3 veranschaulicht anhand einer Kurvenfahrt des Fahrzeuges aus Fig.2 die Wirkung der Erfindung. Bei Überschreiten einer vorgegebenen Querbeschleunigung (z.B. > 4m/s²) wird zunächst ein "geringer" Bremseingriff am Auflieger durchgeführt (F_{B}), der die Querbeschleunigung kaum beeinflußt. Setzt dabei ein ABS-Regeleingriff ein, wird eine stärkere Bremsung durchgeführt, um die Querbeschleunigung entsprechend zu reduzieren.

Wie leicht zu erkennen, resultiert aus Brems- (F_{B} ) und Zentrifugalkraft (F_{Z} ) eine Kraft (F_{R}), die sich stabilisierend auf die Kippneigung des Fahrzeuges auswirkt. Zur Stabilisierung des Fahrzeuges kann es sogar vorteilhaft sein, das ABS-System (beispielsweise über ein Relais) außer Funktion zu setzen.

## Patentansprüche

1. Fahrdynamik-Regelungsverfahren für Kraftfahrzeuge, insbesondere für Nutzfahrzeuge, die mit einem ABS-System versehen sind, bei dem bei Blockierneigung der Bremsdruck im Sinne eines Verhinderns eines zu hohen Radschlupfes variiert wird, dadurch gekennzeichnet, daß eine Abnahme der Kippstabilität des Fahrzeuges während einer Kurvenfahrt anhand eines Einsetzens eines ABS-Regeleingriffes ermittelt wird.

2. Fahrdynamik-Regelungsverfahren nach Anspruch 1, dadurch gekennzeichnet, daß bei einer detektierten Abnahme der Kippstabilität ein die Kippstabilität des Fahrzeuges erhöhender Fahrdynamik-Regeleingriff ausgelöst wird.

3. Fahrdynamik-Regelungsverfahren nach Anspruch 1 oder 2 gekennzeichnet durch folgende Schritte:
A) Ermittlung der Querbeschleunigung des Fahrzeuges;
B) Auslösen eines relativ zur maximal möglichen Bremskraft geringen Bremseingriffes;
C) Überwachung des ABS-Systemes;
D) Bei einem Ansprechen des ABS-Systemes: Auslösen eines Alarmsignales und/oder eines Regeleingriffes, insbesondere eines Bremseingriffes.

4. Fahrdynamik-Regelungsverfahren nach einem der vorstehenden Ansprüche, dadurch gekennzeichnet, daß bei einem Sattelzug (1) mit Zugmaschine (2) und Sattelanhänger (3) zur Ermittlung einer Abnahme der Kippstabilität des Fahrzeuges während einer Kurvenfahrt allein der Beginn eines ABS-Regel-Eingriffes am Anhänger (3) verwendet wird.

5. Fahrdynamik-Regelungsverfahren nach einem der vorstehenden Ansprüche, dadurch gekennzeichnet, daß im Schritt C der die Kippstabilität des Fahrzeuges erhöhende Regeleingriff ein Bremsen mit deaktiviertem ABS ist.

6. Fahrdynamik-Regelungsvorrichtung für Kraftfahrzeuge, insbesondere für Nutzfahrzeuge (1), die ein ABS-System aufweisen, bei dem bei Blockierneigung der Bremsdruck im Sinne eines Verhinderns eines zu hohen Radschlupfes variierbar ist, gekennzeichnet durch eine Einrichtung (4) - insbesondere eine Zusatzsoftware zum ABS-System, die derart ausgelegt ist, daß eine Abnahme der Kippstabilität des Fahrzeuges (1) während einer Kurvenfahrt anhand eines Einsetzens eines ABS-Regel-Eingriffes ermittelt wird.

## Claims

1. Method of controlling vehicle travel dynamics for motor vehicles, particularly for utility vehicles equipped with an antilocking system wherein in the event of a locking tendency the braking pressure is varied in the sense of prevention of excessive wheel slip, characterised in that a reduction of the tipping stability of the vehicle in cornering is determined on the basis of the commencement of an antilocking control intervention.

2. Method of controlling vehicle travel dynamics according to Claim 1, characterised in that in the event of a detected reduction of the tipping stability a travel dynamics control intervention is triggered for an increase of the tipping stability of the vehicle.

3. Method of controlling vehicle travel dynamics according to Claim 1 or 2, characterised by the following steps:
(A) detection of the transverse acceleration of the vehicle;
(B) triggering of a braking intervention which is slight relative to the maximum braking force possible;
(C) monitoring the antilocking system;
(D) in the event of response of the antilocking system: triggering of an alarm signal and/or a control intervention, particularly a braking intervention.

4. Method of controlling vehicle travel dynamics according to any of the preceding Claims, characterised in that on an articulated train (1) including a traction engine (2) and a semitrailer (3) for the detection of a reduction of the tipping stability of the vehicle during cornering only the commencement of an antilocking control intervention on said semitrailer is employed.

5. Method of controlling vehicle travel dynamics according to any of the preceding Claims, characterised in that in step C the control intervention increasing the tipping stability of the vehicle is brake application with deactivation of the anti-locking system.

6. Device for controlling vehicle travel dynamics for motor vehicles, particularly for utility vehicles equipped with an antilocking system wherein in the event of a locking tendency the braking pressure is varied in the sense of prevention of excessive wheel slip, characterised by a means (4) - particularly an additional software completing the antilocking system - is so designed that a reduction of the tipping stability of the vehicle (1) in cornering is determined on the basis of the commencement of an antilocking control intervention.

## Revendications

1. Procédé à régler la dynamique du mouvement de véhicules automobiles, en particulier pour véhicules utilitaires équipés d'un système anti-enrayeur dans lequel, au cas d'une tendance de blocage, la pression de freinage est variée dans le sens d'un empêchement d'un patinage des roues excessif, caractérisé en ce qu'une réduction de la stabilité au déversement du véhicule (1), en négociant un virage, est déterminée à partir du commencement d'une intervention de réglage anti-enrayeur.

2. Procédé à régler la dynamique du mouvement de véhicules selon la revendication 1, caractérisé en ce qu'au cas d'une réduction déterminée de la stabilité au déversement, une intervention de réglage de la dynamique du mouvement du véhicule est déclenchée afin d'augmenter la stabilité au déversement du véhicule.

3. Procédé à régler la dynamique du mouvement de véhicules selon la revendication 1 ou 2, caractérisé par les étapes suivantes:
(A) détection d'une accélération transversale du véhicule;
(B) déclenchement d'une intervention par freinage qui est faible relativement à la puissance de freinage possible;
(C) surveillance du système anti-enrayeur;
(D) au cas d'une réponse du système anti-enrayeur: déclenchement d'un signal d'alarme et/ou d'une intervention de réglage, en particulier d'une intervention par freinage.

4. Procédé à régler la dynamique du mouvement de véhicules selon une quelconque des revendications précédentes, caractérisé en ce que sur un train routier articulé (1) comprenant un véhicule tracteur (2) et une semi-remorque (3), seulement le commencement d'une intervention de réglage anti-enrayeur sur ladite semi-remorque est utilisé pour la détection d'une réduction de la stabilité au déversement du véhicule négociant un virage.

5. Procédé à régler la dynamique du mouvement de véhicules selon une quelconque des revendications précédentes, caractérisé en ce que dans l'étape C l'intervention de réglage, qui augmente la stabilité au déversement du véhicule, est un freinage à désactivation du système anti-enrayeur.

6. Dispositif à régler la dynamique du mouvement de véhicules automobiles, en particulier pour véhicules utilitaires équipés d'un système anti-enrayeur dans lequel, au cas d'une tendance de blocage, la pression de freinage est variée dans le sens d'un empêchement d'un patinage des roues excessif, caractérisé par des moyens (4) - en particulier de logiciel additionnel pour le système antienrayeur - si conçus qu'une réduction de la stabilité au déversement du véhicule (1) en négociant un virage est déterminée à partir du commencement d'une intervention de réglage anti-enrayeur.
